# EUROPEAN PATENT APPLICATION

(11) **EP 4 621 035 A1**
(43) Date of publication of application: **24.09.2025**
(21) Application number: 24164188.5
(22) Date of filing: 18.03.2024
(51) Int. Cl.: C11D 3/00, C11D 3/382, C11D 3/34, C11D 1/72, C08L 97/00

(54) **LIGNIN-BASED SOIL RELEASE AGENT**

(71) Applicant: Borregaard AS, 1721 Sarpsborg (NO)
(72) Inventor: The designation of the inventor has not yet been filed
(74) Representative: Wallinger Ricker Schlotter Tostmann

(57) **Abstract**

The present invention relates to the use of a lignin derivative as a soil release agent, wherein the lignin derivative comprises charged functional groups.

## Description

### FIELD OF THE INVENTION

The present invention relates to the use of lignin derivatives having charged functional groups as a soil release agent, especially for applications on solid surfaces. The present invention further relates to a soil release composition as well as to a method for imparting soil release characteristics to a surface, especially a solid surface.

### BACKGROUND OF THE INVENTION

Soil release agents are key ingredients in detergents, for example for textile, industrial, and solid surface cleaners. The primary purpose of soil release agents is to improve cleaning results over multiple cycles and to keep surfaces cleaner for longer as dirt becomes easier to remove. This effect is sometimes referred to as "better next time cleaning". Soil release agents are generally amphiphilic macromolecules capable of forming films (also referred to herein as "coatings") on surfaces to produce a protective layer. Examples include ACUSOL PRO Polymer from Dow for hard surface cleaning, and TexCare SRN 260 from Clariant for fabric.

Throughout the years, different classes of soil release agents have been developed. For example, synthetic petroleum-based polymers are widely used as soil release agents, and, in particular, high molecular weight, cross-linked and modified polycarboxylates have been proposed, as described in US 3,912,681. However, this material must be applied at a pH of less than 3 to produce the required film/coating, which is not suitable for many applications. Further, aromatic polyesters, particularly water-soluble copolymers of terephthalate polyesters as described in US 3,959,230, are frequently used as film-forming polymers for soil release applications, mainly in laundry applications. These petroleum-based polymers have been optimized for high performance soil release, but market and regulatory pressures are forcing the industry to find more sustainable solutions. For example, regulations on microplastics threaten semi-soluble film-forming petrochemical polymers, and consumers are demanding products with plantbased and biodegradable ingredients that are sustainably sourced.

Chemically modified polysaccharides have been proposed as more sustainable alternatives to purely petroleum-based soil release polymers. In particular, carboxymethyl cellulose (CMC) has long been known as a soil release polymer in laundry and surface cleaning. For example, US 2,986,471 dates from the 1950s and describes CMC as a film-forming polymer for soil release in vehicle cleaning. The disadvantage with highly hydrophilic polymers like CMC, however, is that they require high dosages to form the required film and are removed completely in a single rinse, so the soil release effect diminishes rapidly in moist environments.

In fact, soil release agents should maintain their effectiveness over some time and not degrade or lose efficacy quickly upon repeated use or exposure to external conditions. However, when it comes to soil release agents for solid surfaces, a particular challenge is that solid surfaces are typically subjected to repeated cleaning cycles or prolonged exposure to environmental factors (for example rain). Also, due to the generally non-absorbent character of solid surfaces (see below), the contact area between the solid surface and the soil release agent is minimal with the consequence that soil release agents, in particular hydrophilic agents, tend to be washed off easily from solid surfaces.

More hydrophobic sugar-based polymers have, thus, been proposed, such as in US 6,764,992, which describes vinyl-grafted polysaccharides for soil release, but in laundry detergents. Combining sugar-derived and petroleum-derived reagents increases the biobased content of soil-release polymers, but sugars and polysaccharides are primary raw materials from agriculture with a sizeable environmental impact.

A more sustainable approach involves using secondary raw materials from biobased wastes and side streams. Secondary raw materials have minimal impact on the environment as they are produced already in industrial processes. This approach has been described recently by Gelita in EP 2 821 473, WO 2023/1983321, and EP 2 821 470 using collagen and gelatin side streams from meat processing wastes to produce film-forming polypeptides. These materials are proposed for use as soil release agents. However, while this approach provides a sustainable solution for soil release polymers, animal-derived products are not favored in many consumer markets, and certifications complicate use of meat-industry side streams.

In view of the above, there is still an unmet need for soil release agents that are sustainably sourced and perform well under relevant application conditions (concentration, pH, etc.), in particular provide for efficient and long-lasting soil release characteristics, i.e. provide an efficient and long-lasting film/coating during an initial cleaning cycle that assists in soil (dirt) removal over subsequent cleaning cycles.

In sum, there is a generally high demand for bio-based and eco-friendly yet effective soil release agents, in particular for applications on solid surfaces.

Many patents on detergents mention lignin derivatives as a known cleaning additive. For example: BE601054D uses lignosulfonate as a dispersant in laundry; US3177149A (1960) mentions lignin as a 'known surfactant' in laundry detergent; US3636582A (1970) mentions lignosulfonate as a known "cleansing agent"; US6225272B1 (1997) mentions lignosulfonate as an 'anionic surfactant' compatible with the dishwasher detergent formulation; EP2756063B1 finds lignosulfonate to give improved enzyme cleaning performance; US5104584 describes using lignosulfonate specifically to prevent fabric encrustation in laundry, which is the build-up of mineral scale (calcium carbonate) on the fabric; WO2021165298A1 describes use of lignosulfonate to prevent deposition of dishwasher film; WO2022194774A1 describes use of lignosulfonate for antiredeposition in laundry; WO2000039257A1 describes use of lignosulfonate specifically to improve the drainage of water from hard surfaces, an affect known as "anti-rain" and "antifog". None of this prior art describes use of lignin or lignosulfonate for soil-release or 'better next-time cleaning' as understood by those skilled in the art, where the lignin assists in dirt removal over two or more cleaning cycles via the formation of a surface film.

### SUMMARY OF THE PRESENT INVENTION

Based on the above, it is an object of the present invention to provide biobased, sustainably sourced, easy to produce, and effective soil release agents, in particular for applications on solid surfaces. Further, it is desired that the agent can be prepared easily and cost-effectively in industrial-scale processes using naturally occurring materials.

These objects are achieved by the lignin derivative described herein. The present invention is based on the surprising finding that lignin derivatives comprising charged functional groups (that provide water solubility), such as lignosulfonate or oxidized Kraft lignin, are effective soil release agents, in particular forapplications on solid surfaces, and provide for a good "better next time cleaning" effect.

Further, lignin derivatives can be obtained as by-products in industrial processes and, therefore, are available in large quantities and are considered eco-friendly.

Further, it has been found that the soil release properties can be fine-tuned by varying the counter ions balancing the charge of the charged functional groups and/or the degree of sulfonation (expressed in terms of the amount of organic sulfur). In particular, it has surprisingly been found that the soil release performance on solid surfaces increases with decreasing amount of sulfonate groups and/or when using doubly positively charged counter ions.

Accordingly, in a ***first aspect,*** the present invention relates to the use of a lignin derivative as described herein as a soil release agent.

In a ***second aspect,*** the present invention relates to a soil release composition.

In a ***third aspect,*** the present invention relates to a method for imparting soil release characteristics to a surface.

The invention is described in more detail in the following, with reference to the enclosed figures, which are only meant to be illustrative, wherein:
**Fig. 1** shows plastic surfaces pre-treated with compositions A-C (see Example 1), soiled with an oil-carbon mixture (as described in Example 1), and then rinsed for 1 second with water (Figure 1a) and 20 seconds with water (Figure 1b).
**Fig. 2** shows steel surfaces pre-treated with solutions A-C (see Example 2), soiled with an oil-carbon mixture (see Example 2), and then rinsed for 1 second with water (Figure 2a), 20 seconds with water (Figure 2b), and 2 minutes with water (Figure 2c). Figure 2c shows the steel plates laying flat on a surface (after 2 minutes rinsing with water).
**Fig. 3** shows an untreated steel surface soiled with an oil-carbon mixture following 0, 10, and 60 second water rinsing.
**Fig. 4** shows a steel surface treated with a 0.1 wt.% composition of LS-1 following 0, 10, and 60 second water rinsing.
**Fig. 5** shows a steel surface treated with a 0.1 wt.% composition of LS-2 following 0, 10, and 60 second water rinsing.
**Fig. 6** shows a steel surface treated with a 0.1 wt.% composition of LS-5 following 0, 10, and 60 second water rinsing.
**Fig. 7** shows a steel surface treated with a 1 wt.% composition of LS-1 following 0, 10, and 60 second water rinsing.
**Fig. 8** shows a steel surface treated with a 1 wt.% composition of LS-2 following 0, 10, and 60 second water rinsing.
**Fig. 9** shows a steel surface treated with a 1 wt.% composition of LS-3 following 0, 10, and 60 second water rinsing.
**Fig. 10** shows a steel surface treated with a 1 wt.% composition of LS-4 following 0, 10, and 60 second water rinsing.
**Fig. 11** shows a steel surface treated with a 1 wt.% composition of LS-5 following 0, 10, and 60 second water rinsing.
**Fig. 12** shows a steel surface treated with a 1 wt.% composition of KL-1 following 0, 10, and 60 second water rinsing.
**Fig. 13** shows an untreated plastic surface soiled with an oil-carbon mixture following 0, 10, and 60 second water rinsing.
**Fig. 14** shows a plastic surface treated with a 0.1 wt.% composition of LS-1 following 0, 10, and 60 second water rinsing.
**Fig. 15** shows a plastic surface treated with a 0.1 wt.% composition of LS-2 following 0, 10, and 60 second water rinsing.
**Fig. 16** shows a plastic surface treated with a 0.1 wt.% composition of LS-5 following 0, 10, and 60 second water rinsing.
**Fig. 17** shows a plastic surface treated with a 1 wt.% composition of LS-1 following 0, 10, and 60 second water rinsing.
**Fig. 18** shows a plastic surface treated with a 1 wt.% composition of LS-2 following 0, 10, and 60 second water rinsing.
**Fig. 19** shows a plastic surface treated with a 1 wt.% composition of LS-3 following 0, 10, and 60 second water rinsing.
**Fig. 20** shows a plastic surface treated with a 1 wt.% composition of LS-4 following 0, 10, and 60 second water rinsing.
**Fig. 21** shows a plastic surface treated with a 1 wt.% composition of LS-5 following 0, 10, and 60 second water rinsing.
**Fig. 22** shows a plastic surface treated with a 1 wt.% composition of KL-1 following 0, 10, and 60 second water rinsing.
**Fig. 23** shows UV spectra of a cuvette treated with a 10 wt.% composition of LS-1 after no rinses, 1x rinse and 2x rinses with water, compared to the cuvette without treatment.
**Fig. 24** shows contact angles of a water droplet on an aluminum surface without treatment and after treatment with 1 wt.% compositions of LS-2 and LS-5 [A)], and a photograph of the droplets during the measurement [B)].

### DETAILED DESCRIPTION OF THE INVENTION

The present invention is at least partly based on the surprising finding that lignin derivatives comprising charged functional groups, such as lignosulfonate or oxidized Kraft lignin, are effective soil release agents, in particular for applications on solid surfaces. Further, it has been found that the soil release properties can be fine-tuned by varying the counter ions balancing the charge of the charged functional groups and/or by varying the degree of sulfonation (expressed in terms of the amount of organic sulfur). In particular, the inventors have surprisingly found that a lower degree of sulfonation and/or the use of doubly positively charged counter ions (for example calcium) lead to improved soil release characteristics on solid surfaces.

In particular, it has been shown that the lignin derivative described herein improves cleaning, avoids surface fouling, and simplifies maintenance of solid surfaces by providing better next time cleaning. The lignin derivative can be used in various detergents that require soil release polymers, such as surface cleaners, vehicle cleaners, window cleaners, etc.

The primary function of the lignin derivative herein is not to disperse dirt and improve cleaning during a single cleaning cycle. Rather, the lignin derivative herein works after two or more cleaning cycles where during the first cleaning cycle the lignin is deposited onto the cleaned surface, and the deposited film assists in dirt removal in subsequent cleaning cycles (i.e. better next-time cleaning). Use of lignin derivatives herein for soil-release (better next-time cleaning) in hard surface cleaning is a method for dirt removal that requires two or more cycles, whereas the prior art mostly describes methods for dirt removal that occurs in a single cleaning cycle.

In fact, the lignin derivatives described herein have been shown to be washed off from solid surfaces only slowly, i.e. provide for a long-lasting soil release effect on solid surfaces.

In a ***first aspect,*** the present invention relates to the use of a lignin derivative as described herein as a soil release agent. The lignin derivative comprises charged functional groups.

In a preferred embodiment, the charged functional groups are sulfonate groups and/or carboxylate groups. In one embodiment, the charged functional groups are sulfonate groups. In another embodiment, the charged functional groups are carboxylate groups. In a further embodiment, the charged functional groups are sulfonate groups and carboxylate groups.

Lignin (also referred to as "native lignin") is one of the most abundant organic materials in nature and provides strength and support to trees and other plants. Lignin is a biopolymer, more precisely a mixture of biopolymers, that is/are present in the support tissues of plants, particularly in the cell walls providing rigidity to the plants. Lignin is a phenolic polymer, more precisely a mixture of phenolic polymers. The specific structure and composition of lignin depends on the plant and therefore varies depending on the plant from which it is derived. Lignin is sometimes also referred to as the "glue" in the cellulosic skeleton.

Lignin is a biproduct of the pulp and paper industry, produced at a volume of around 100 million tons per year, the vast majority of which is burned at the site. Lignin is a complex biopolymer with hydrophobic and hydrophilic components, consisting primarily of aromatic structures linked via oxygen containing groups such as esters and ethers. Lignin in its native form is insoluble in water except under highly alkaline conditions, but can be made water-soluble by introducing hydrophilic groups such as charged sites (e.g. sulfonate, carboxylate, amines) or polar groups (e.g. polyethoxylates). The most abundant types of lignin produced industrially are the water-insoluble Kraft lignin (from the Kraft pulping process) and the water-soluble lignosulfonate (from the sulfite pulping process). These products can be further modified to change their properties, e.g. by introducing or removing charged sites, oxidation, fractionation, grafting, etc.

In a preferred embodiment, the lignin derivative used in the present invention is water-soluble. In this way, water can be used for preparing a soil release composition and the use of organic (environmentally unfriendly) solvents can be avoided.

According to an embodiment of the present invention, the lignin derivative is sulfonated lignin, preferably lignosulfonate or sulfonated Kraft lignin. According to another embodiment, the lignin derivative is oxidized lignin, preferably oxidized Kraft lignin.

It has been found that particularly advantageous soil release characteristics can be achieved with lignin derivatives having an amount of organic sulfur (which is indicative of the degree of sulfonation) of less than 8% w/w and/or by using calcium as a counter ion. Oxidized Kraft lignin does not contain sulfur groups and has also been shown to lead to good soil release characteristics.

Accordingly, in one embodiment, the lignin derivative has an amount of organic sulfur which is associated with the sulfonate groups attached to the lignin of less than 8% w/w, preferably less than 7% w/w, more preferably less than 5% w/w, more preferably less than 4% w/w. Preferably, the lignin derivative has an amount of organic sulfur which is associated with the sulfonate groups attached to the lignin of 0-8% w/w, preferably 1-7% w/w, more preferably 2-5% w/w, more preferably 2-4% w/w.

The amount of "organic" sulfur [%S(org), i.e. the amount of sulfur which is associated with the **sulfonate** groups attached to the lignin], i.e. the degree of sulfonation, is determined based on the difference between total sulfur %S(tot) and the inorganic sulfur %S(inorg) using the following relation: %S(org) = %S(tot) - %S(inorg). Total sulfur is determined with an element analyzer, for instance a ThermoQuest NCS 2500, Appropriate sample amounts (for instance 1-2 mg) are placed in tin capsules with a suitable catalyst (for instance Vanadium pentoxide). Total sulfur in the sample is then quantified using the 2,5-Bis(5-tert-butyl-2-benzo-oxazol-2-yl)thiophene (BBOT) standard, or other suitable sulfur standards. The samples are combusted at 1400°C and all sulfur is oxidized to SO2 and quantified. Inorganic sulfur is determined by measuring sulfate in oxidized samples using ion chromatography with conductivity detection (for instance Dionex instrument using an IonPac AS11-HC column with 13 mM OH- eluent), 30 mg samples are weighed into 50-ml volumetric flasks. 10 ml of 0.5 % NaOH and 5 ml of 3 % H2O2 are added to oxidize sulfurous inorganic anions into sulfate. Samples are then left 12-16 h to give time to react. Milli-Q water is added and pH neutralized by adding 2 ml of 5 % CH3COOH and diluted to the mark with Milli-Q water. Sulfate standards are prepared between 5 mg/l and 80 mg/l. The sulfate content in the oxidized samples is then determined using ion chromatography according to the instrument manual.

The amount of "carboxylate", i.e. COOH groups can be determined by potentiometric titration as described in subchapter 7.5.2 ("*Determination of carboxyl Groups by Nonaqueous Potentiometric Titration*") by C.W. Dence in the reference book *"*Methods in Lignin Chemistry", S. Y. Lin and C. W. Dence, Springer-Verlag Berlin Heidelberg, 1992, p 458-464. The amount is expressed as the weight % of carboxylate relative to the overall dry solids weight of the lignin derivative. Details about this standard reference book are provided in the preceding paragraph.

As referred to herein, "sulfonated lignin" is a lignin derivative that is obtained from native lignin by introducing sulfonate groups. Sulfonate groups, as defined herein, are functional groups of the structure -SO₃⁻, wherein the sulfur atom is bound to a carbon atom of the lignin backbone. The negative charge of the -SO₃⁻ groups is balanced by positively charged counter ions. -SOsH groups are also covered by the term "sulfonate groups", as used herein.

The term "lignosulfonate", as used within the context of the present application, refers to any lignin derivative which is formed during sulfite pulping of lignin-containing material, such as, e.g., wood, in the presence of sulfite ions and/or bisulfite ions. For example, during the acidic sulfite pulping of lignin-based material, electrophilic carbon cations in the lignin are produced which are a result of the acid catalyzed ether cleavage. Thus, lignin may react, via these carbo-cations, with the sulfite or bisulfite ions under the formation of lignosulfonates. In an embodiment, the lignin derivative used in the present invention is lignosulfonate.

"Sulfite pulping" is known in the art of wood/plant material processing. Sulfite pulping may be used for producing almost pure cellulose fibers from lignocellulosic biomass (i.e. plant matter). This "pulping" is typically achieved by extracting lignin from lignocellulosic biomass in large pressure vessels called digesters by using various salts of sulfurous acid. During sulfite pulping, lignin molecules are sulfonated and thereby rendered water-soluble. In accordance with the present invention, "sulfite pulping" refers to the process of reacting lignocellulosic biomass or derivatives thereof with at least one salt of sulfurous acid. The salts used in said pulping process are preferably sulfites (SO₃²⁻) or bisulfites (HSO₃⁻). Depending on the pulping conditions, feed material, and potential post processing, the lignosulfonate polymer can have varying structures and chemical functionalities, such as molecular weight, degree of sulfonation, degree of conjugation, carboxylate groups (-COOH), phenolic groups, etc.

Lignosulfonate therefore represents a highly diversified class of materials.

The degree of sulfonation may be suitably adjusted by varying the pulping conditions, with higher sulfite salt content and a higher temperature generally yielding a higher degree of sulfonation.

Sulfite pulping may generally be divided into four main groups: acid, acid bisulfite, weak alkaline, and alkaline sulfite pulping. In an embodiment, cellulosic biomass is cooked with a sulfite, preferably a sodium, calcium, ammonium or magnesium sulfite under acidic, neutral, or basic conditions. This sulfite pulping dissolves most of the native lignin present in the cellulosic biomass as sulfonated lignin (lignosulfonate; water-soluble lignin), together with parts of the hemicellulose.

With regard to the sulfite pulping, the respective disclosure of WO 2010/078930 with the title "Lignocellulosic Biomass Conversion" as filed on December 16, 2009, is incorporated by reference into the present disclosure.

In an embodiment, the lignin derivative is lignosulfonate and has an amount of organic sulfur which is associated with the sulfonate groups attached to the lignin of less than 8% w/w, preferably less than 7% w/w, more preferably less than 5% w/w, more preferably less than 4% w/w. Preferably, the amount of organic sulfur which is associated with the sulfonate groups attached to the lignin of 0-8% w/w, preferably 1-7% w/w, more preferably 2-5% w/w, more preferably 2-4% w/w.

In an embodiment of the present invention, the lignin derivative is lignosulfonate as obtained from sulfite pulping. As referred to herein, *"lignosulfonate* as *obtained from sulfite pulping"* is lignosulfonate that is the direct product of sulfite pulping. Or, in other words, *"lignosulfonate* as *obtained from sulfite pulping"* is lignosulfonate directly obtained from a sulfite pulping process without the application of any post-pulping functionalization steps. Thus, lignosulfonate obtained as a by-product of cellulose production by means of sulfite pulping is a "lignosulfonate as obtained from sulfite pulping" within the meaning of the present invention.

In another embodiment, one or more post-pulping sulfonation or oxidation steps, preferably oxidation steps, can be performed for fine-tuning the soil release characteristics. Since the soil release characteristics tend to decrease with increasing amount of sulfonate groups, it is preferred that the post-pulping modification step is an oxidation step, if applied at all. Said oxidation step can be selected from at least one of the following: oxidation with air (oxygen) and/or a periodate, peroxide, ozone or the like, optionally at elevated temperature, TEMPO oxidation, optionally in the presence of an oxidation catalyst and other methods and agents known to the skilled person for oxidizing biomass.

As referred to herein, a *"post-pulping functionalization step",* a *"post-pulping step"* or the like is a chemical or physical treatment step that is applied *subsequent* to sulfite pulping or Kraft pulping and that alters the molecular structure of the lignin derivative subjected to said *"post-pulping functionalization step".* However, any step applied after sulfite pulping or Kraft pulping that does not alter the chemical structure of the lignin derivative, for example, a step for increasing the purity of the lignin product (e.g. a washing step, a filtration step, and the like) is not a *"post-pulping functionalization step", "post-pulping step"* or the like within the meaning of the present application.

As used herein, "Kraft lignin" refers to the lignin product as obtained from a Kraft pulping process. Kraft lignin does not comprise sulfonate groups. Thus, if Kraft lignin is to be used in the present invention, the Kraft lignin is rendered water-soluble in a post-pulping functionalization step, for example by sulfonation or oxidation. Hence, in one embodiment of the invention, the lignin derivative is sulfonated lignin obtained from Kraft lignin (also referred to as "sulfonated Kraft lignin"). In embodiments, such sulfonated Kraft lignin may be obtained when Kraft lignin is treated in a post-pulping sulfonation reaction, for example with alkali sulfite and alkylaldehyde at elevated temperature and pressure. In other embodiments, sulfite pulping may be used for sulfonating Kraft lignin. If such sulfonated Kraft lignin is used in the present invention, the amount of organic sulfur which is associated with the sulfonate groups attached to the lignin is preferably less than 8% w/w, preferably less than 7% w/w, more preferably less than 5% w/w, more preferably less than 4% w/w. Preferably, the amount of organic sulfur which is associated with the sulfonate groups attached to the lignin of 0-8% w/w, preferably 1-7% w/w, more preferably 2-5% w/w, more preferably 2-4% w/w.

In another embodiment, the lignin derivative is oxidized Kraft lignin, i.e. Kraft lignin that has been subjected to a post-pulping oxidation reaction. In preferred embodiments, said oxidation step is selected from at least one of the following: oxidation with air (oxygen) and/or a periodate, peroxide, ozone or the like, optionally at elevated temperature, TEMPO oxidation, optionally in the presence of an oxidation catalyst and other methods and agents known to the skilled person for oxidizing biomass.

"Kraft pulping" (also referred to as "sulfate pulping") entails treatment of wood chips with a hot mixture of water, sodium hydroxide, and sodium sulfide, known as white liquor, that breaks the bonds that link lignin, hemicellulose, and cellulose. Kraft lignin can be described as precipitated, non-sulfonated alkaline lignin. Kraft lignin differs structurally and chemically from lignosulfonate, e.g. in that Kraft lignin is not water-soluble. Thus, if Kraft lignin is used, the Kraft lignin must first be rendered water-soluble, e.g. by sulfonation. Sulfite pulping or other sulfonating reactions may be used for sulfonating Kraft lignin.

Examples of post pulping methods to optimize the sulfonate/carboxylate content without introducing non-biobased carbon (i.e. carbon not originating from the lignin) into the lignin include sulfonation and various types of oxidation (e.g. thermal treatment, oxygen, peroxide, ozone, etc.).

In accordance with the above, the lignin derivative can be obtained by treating native lignin in a Kraft pulping process followed by one or more post-pulping sulfonation steps or oxidation steps. Since the soil release characteristics tend to decrease with increasing amount of sulfonate groups, it is preferred that the post-pulping modification step is an oxidation step. Said oxidation step can be selected from at least one of the following: oxidation with air (oxygen) and/or a periodate, peroxide, ozone or the like, optionally at elevated temperature, TEMPO oxidation, optionally in the presence of an oxidation catalyst and other methods and agents known to the skilled person for oxidizing biomass.

As a skilled person knows, the charge of the functional groups of the lignin derivative is balanced by counter ions to provide a net neutral compound. The counter ions may be singly positively charged ion or doubly positively charged.

The singly positively charged counter ion may be alkali metal ions. A preferred alkali metal ion is a sodium ion. The doubly positively charged counter ion may be alkaline earth metal ions. The alkaline earth metal ions are preferably magnesium or calcium ions, more preferably calcium ions. In a preferred embodiment, the counter ions are doubly positively charged ions, preferably alkaline earth metal ions, more preferably magnesium or calcium ions, even more preferably calcium ions.

In one embodiment, the lignin derivative comprises sulfonate groups and the counter ions are doubly positively charged ions, preferably alkaline earth metal ions, more preferably magnesium or calcium ions, even more preferably calcium ions.

As noted above, it has been found that the soil release characteristics tend to decrease with increasing amount of sulfonate groups. Accordingly, in one embodiment the lignin derivative does not comprise sulfonate groups.

In one embodiment, the lignin derivative is oxidized Kraft lignin and the counter ions are singly positively charged ions. The singly positively charged ions are preferably alkali metal ions, more preferably sodium ions.

In an embodiment, the average molecular weight of the lignin derivative is less than 50,000 Da, preferably 1,000-50,000 Da. In another embodiment, the average molecular weight of the lignin derivative is less than 40,000 Da, preferably 2,000-40,000 Da. In another embodiment, the average molecular weight of the lignin derivative is less than 30,000 Da, 3,000-30,000 Da.

The molecular weight is determined by means of size exclusion chromatography as described in G. Fredheim et al., "Molecular weight determination of lignosulfonates by size-exclusion chromatography and multi-angle laser light scattering", J Chromatogr A., 942, 2002, 191-199*.*

In an embodiment of the present invention, the lignin derivative is used together with a surfactant. It has been found that this combination leads to good film-forming properties. While the nature of the surfactant is not particularly limited, alcohol ethoxylate has been found to lead to particularly good results. Thus, in one embodiment, the surfactant is alcohol ethoxylate.

As noted above, it has been found that the use of the lignin derivative described herein as a soil release agent overcomes the drawbacks associated with currently used soil release agents. Accordingly, in one embodiment, the lignin derivative described herein is used in the absence of one or more members of the list consisting of polycarboxylates, aromatic polyesters, polysaccharide derivatives, in particular CMC.

As noted above, it has been found that the lignin derivatives described herein are particularly effective soil release agents on solid surfaces, such as metal or plastic surfaces. Accordingly, in one embodiment, the lignin derivative is used as a soil release agent on a solid surface, preferably a metal or plastic surface.

In the context of cleaning compositions and as used herein, a "solid surface" refers to any non-porous or non-absorbent material that maintains its shape and structure under normal conditions. Solid surfaces generally allow for cleaning without absorption or penetration of the cleaning solution into the material. In contrast, textiles are typically porous and can absorb liquids, making them distinct from solid surfaces in terms of their properties and how cleaning compositions interact with them. "Normal conditions" refer to the standard operating environment or circumstances in which a material or product is intended to be used. It goes without saying that "normal conditions" may vary depending on the specific application and the material involved. However, a person of skill in the art of cleaning compositions and soil release compositions knows which surfaces are considered as solid surfaces. In particular, solid surfaces include materials such as glass, metal, plastic (also referred to as "polymeric materials"), wood (when sealed), ceramics, and stone.

In an embodiment, the lignin derivative is not used as an additive in a machine dishwasher detergent formulation or a laundry detergent composition.

In a ***second aspect,*** the present invention relates to a soil release composition. The soil release composition comprises a lignin derivative as described herein and water.

In an embodiment, the lignin derivative is present in an amount of 0.01 wt.% to 2.0 wt.%, based on the total weight of the composition. For example, the lignin derivative may be present in an amount of 0.08 wt.% to 0.12 wt.% or in an amount of 0.8 wt.% to 1.2 wt.%.

As noted above, it has been found that a combination of the lignin derivative and a surfactant leads to good film-forming properties. Accordingly, in one embodiment, the soil release composition comprises a surfactant. The surfactant may be alcohol ethoxylate. In one embodiment, the surfactant is present in an amount of 0.01 wt.% to 5 wt.%, preferably 0.01 wt.% to 3 wt.%, more preferably 0.01 wt.% to 1 wt.%, more preferably 0.05 wt.% to 0.15 wt.%, based on the total weight of the composition.

It is preferred that the soil release composition does not comprise petroleum-based polymers. In one embodiment, the soil release composition does not comprise one or more of polycarboxylates, aromatic polyesters, polysaccharide derivatives, in particular CMC.

In line with the above, in an embodiment, the soil release composition is not a laundry detergent composition or a machine dishwasher detergent formulation.

In a ***third aspect,*** the present invention relates to a method for imparting soil release characteristics to a surface. The method comprises the following steps: (A) contacting the surface with a soil release composition defined in any one of claims, and (B) drying the surface after application of the soil release composition, thereby creating a coating on the surface, wherein the coating comprises a lignin derivative as described herein.

Step (A) is also referred to herein as the "coating step" and step (B) is also referred to herein as the "drying step".

The method described above comprises one round of coating and drying, i.e. the performance of step (A) followed by step (B). In another embodiment, the method may comprise two rounds of coating and drying, i.e. step (A), followed by step (B), followed by step (A), followed by step (B). In this way, a more robust film/coating that is more stable towards being washed off can be obtained. The method according to the present invention may also comprise three rounds of coating and drying.

In an embodiment, the method may comprise a polishing step (A1) performed after step (A) and prior to step (B). As one of skill in the art will understand, if polishing step (A1) is present, a method comprising two rounds of coating and drying comprises the step sequence (A), (A1), (B), (A), (A1), (B); and a method comprising three rounds of coating and drying comprises the step sequence (A), (A1), (B), (A), (A1), (B), (A), (A1), (B).

The contact angle of a water droplet on a surface changes when treated with the lignin derivative described herein. Due to the quite hydrophilic nature of the lignin derivative, the contact angle usually decreases after application of the lignin derivative to a surface. Accordingly, in one embodiment, the contact angle of a water droplet on the untreated surface, i.e. the surface present before application of the soil release composition, is higher than the contact angle of a water droplet on the coated surface. In a particular embodiment, the contact angle of a water droplet on the coated surface is between 15 and 40 degrees. The contact angle is determined according to drop shape analysis.

In line with the above, in one embodiment of the method according to the present invention, the surface is a solid surface. For example, the surface may be a glass surface, a metal surface, a plastic surface (also referred to as "polymeric surface"), a sealed wood surface, a ceramic surface, or a stone surface. In a preferred embodiment, the surface is a metal or plastic surface.

In one embodiment, the surface is a metal surface, such as a steel surface, and the soil release composition comprises the lignin derivative in an amount of 0.08 wt% to 0.12 wt%, based on the total weight of the composition. In another embodiment, the surface is a plastic surface and the soil release composition comprises the lignin derivative in an amount of 0.8 wt.% to 1.2 wt.%, based on the total weight of the composition.

The present invention is also described by the following Items, also in combination with each other and in combination with features or embodiments described throughout the present disclosure.
1. Use of a lignin derivative as a soil release agent, wherein the lignin derivative comprises charged functional groups.
2. The use according to Item 1, wherein the lignin derivative is water-soluble.
3. The use according to Item 1 or 2, wherein the charged functional groups are sulfonate and/or carboxylate groups.
4. The use according to any one of the preceding Items, wherein the lignin derivative is sulfonated lignin, preferably lignosulfonate or sulfonated Kraft lignin, or
   wherein the lignin derivative is oxidized lignin, preferably oxidized Kraft lignin.
5. The use according to any one of the preceding Items, wherein the lignin derivative is obtained by treating native lignin in a sulfite pulping process, optionally followed by one or more post-pulping sulfonation or oxidation steps, preferably oxidation steps; or
   wherein the lignin derivative is obtained by treating native lignin in a Kraft pulping process followed by one or more post-pulping sulfonation steps; or
   wherein the lignin derivative is obtained by treating native lignin in a Kraft pulping process followed by one or more post-pulping oxidation steps.
6. The use according to any one of the preceding Items, wherein the lignin derivative is lignosulfonate or oxidized Kraft lignin.
7. The use according to Item 6, wherein the lignin derivative is lignosulfonate.
8. The use according to Item 7, wherein the lignin derivative is lignosulfonate as obtained from sulfite pulping.
9. The use according to Item 6, wherein the lignin derivative is oxidized Kraft lignin.
10. The use according to any one of the preceding Items, wherein the charge of the functional groups is balanced by counter ions and the counter ions are singly positively charged ions, preferably alkali metal ions, more preferably sodium ions, or doubly positively charged ions, preferably alkaline earth metal ions, more preferably magnesium or calcium ions, even more preferably calcium ions.
11. The use according to Item 10, wherein the counter ions are doubly positively charged ions, preferably alkaline earth metal ions, more preferably magnesium or calcium ions, even more preferably calcium ions.
12. The use according to Item 11, wherein the counter ions are calcium ions.
13. The use according to any one of the preceding Items, wherein the lignin derivative has an amount of organic sulfur which is associated with the sulfonate groups attached to the lignin of less than 8% w/w, preferably less than 7% w/w, more preferably less than 5% w/w, more preferably less than 4% w/w,
   wherein the **amount of "organic" sulfur** (%S(org) is determined based on the difference between *total sulfur* %S(tot) and the inorganic sulfur %S(inorg) using the following relation: %S(org) = %S(tot) - %S(inorg); wherein the total sulfur is determined with a ThermoQuest NCS 2500 element analyzer, wherein 1-2 mg of sample are placed in tin capsules with a Vanadium pentoxide catalyst, wherein total sulfur in the sample is then quantified using the 2,5-Bis(5-tert-butyl-2-benzo-oxazol-2-yl)thiophene (BBOT) standard, further wherein samples are combusted at 1400°C and all sulfur is oxidized to SO₂ and quantified, wherein the *inorganic sulfur* is determined by measuring sulfate in an oxidized sample using ion chromatography with conductivity detection using a Dionex instrument using an IonPac AS11-HC column with 13 mM OH- eluent, wherein 30 mg sample are weighed into 50-ml volumetric flasks, wherein 10 ml of 0.5 % NaOH and 5 ml of 3 % H₂O₂ are added to oxidize sulfurous inorganic anions into sulfate, wherein the sample is then left 12-16 h to give time to react, wherein Milli-Q water is added and pH neutralized by adding 2 ml of 5 % CH3COOH and diluted to the mark with Milli-Q water, wherein sulfate standards are prepared between 5 mg/l and 80 mg/l, wherein the sulfate content in the oxidized samples is then determined using ion chromatography.
14. The use according to Item 13, wherein the lignin derivative has an amount of organic sulfur which is associated with the sulfonate groups attached to the lignin of 0-8% w/w, preferably 1-7% w/w, more preferably 2-5% w/w, more preferably 2-4% w/w.
15. The use according to any one of the preceding Items, wherein the lignin derivative comprises sulfonate groups and the counter ions are a doubly positively charged ions, preferably alkaline earth metal ions, more preferably magnesium or calcium ions, even more preferably calcium ions.
16. The use according to any one of Items 1-14, wherein the lignin derivative is oxidized Kraft lignin and the counter ions are singly positively charged ions, preferably alkali metal ions, more preferably sodium ions.
17. The use according to any one of Items 1-14, wherein the lignin derivative does not comprise sulfonate groups.
18. The use according to any one of the preceding Items, wherein the average molecular weight of the lignin derivative, as measured as specified in the description, is less than 50,000 Da, preferably less than 40,000 Da, more preferably less than 30,000 Da.
19. The use according to Item 18, wherein the average molecular weight of the lignin derivative, as measured as specified in the description, is 1,000-50,000 Da, preferably 2,000-40,000 Da, more preferably 3,000-30,000 Da.
20. The use according to any one of the preceding Items, wherein the lignin derivative is used in combination with a surfactant, preferably alcohol ethoxylate.
21. The use according to any one of the preceding Items, wherein the lignin derivative is used on a solid surface, preferably on a metal or plastic surface.
22. The use according to any one of the preceding Items, wherein the lignin derivative is used in the absence of one or more members of the list consisting of polycarboxylates, aromatic polyesters, polysaccharide derivatives, in particular CMC.
23. The use according to any one of the preceding Items, wherein the lignin derivative is not used as an additive in a machine dishwasher detergent formulation or a laundry detergent composition.
24. A soil release composition, comprising:
   - a lignin derivative as defined in one of Items 1-19, and
   - water
25. The soil release composition according to Item 24, wherein the lignin derivative is present in an amount of 0.01 wt.% to 2.0 wt.%, based on the total weight of the composition.
26. The soil release composition according to Item 25, wherein the lignin derivative is present in an amount of 0.08 wt.% to 0.12 wt.%.
27. The soil release composition according to Item 25, wherein the lignin derivative is present in an amount of 0.8 wt.% to 1.2 wt.%.
28. The soil release composition according to any one of Items 24-27, wherein the composition further comprises a surfactant, preferably alcohol ethoxylate.
29. The soil release composition according to Item 28, wherein the surfactant is present in an amount of 0.01 wt.% to 5 wt.%, preferably 0.01 wt.% to 3 wt.%, more preferably 0.01 wt.% to 1 wt.%, more preferably 0.05 wt.% to 0.15 wt.%, based on the total weight of the composition.
30. The soil release composition according to any one of Items 24-29, wherein the soil release composition does not comprise petroleum-based polymers.
31. The soil release composition according to any one of Items 24-30, wherein the soil release composition does not comprise one or more of polycarboxylates, aromatic polyesters, polysaccharide derivatives, in particular CMC.
32. The soil release composition according to any one of Items 24-31, wherein the soil release composition is not a laundry detergent composition or a machine dishwasher detergent formulation.
33. A method for imparting soil release characteristics to a surface, the method comprising the following steps:
   (A) contacting the surface with a soil release composition defined in any one of Items 24-32, and
   (B) drying the surface after application of the soil release composition, thereby creating a coating on the surface, wherein the coating comprises a lignin derivative as defined in one of claims 1-19.
34. The method according to Item 33, wherein the method comprises the following sequence of steps: (A), (B), (A), (B).
35. The method according to Item 33 or 34, wherein the method comprises a polishing step (A1) performed after step (A) and prior to step (B).
36. The method according to Item 35, wherein the method comprises the following sequence of steps: (A), (A1), (B), (A), (A1), (B).
37. The method according to any one of Items 33-36, wherein the contact angle of a water droplet on the untreated surface, i.e. the surface present before application of the soil release composition, is higher than the contact angle of a water droplet on the coated surface.
38. The method according to any one of Items 33-37, wherein the contact angle of a water droplet on the coated surface is between 15 and 40 degrees.
39. The method according to any one of Items 33-38, wherein the surface is a solid surface.
40. The method according to any one of Items 33-39, wherein the surface is a metal surface, preferably a steel surface, and the soil release composition comprises the lignin derivative in an amount of 0.08 wt.% to 0.12 wt.%, based on the total weight of the composition.
41. The method according to any one of Items 33-39, wherein the surface is a plastic surface and the soil release composition comprises the lignin derivative in an amount of 0.8 wt.% to 1.2 wt.%, based on the total weight of the composition.

### EXAMPLES

The present invention is now further described and illustrated by the following examples.

### Example 1: Soil release from plastic surfaces at 1 wt.% lignin derivative concentration and in the presence of surfactant

Soil release tests were carried out on solid surfaces to demonstrate the film forming properties of different water-soluble lignin derivatives. Different lignosulfonates and an oxidized Kraft lignin were tested for soil release properties on both steel and plastic surfaces.

The following soil compositions were used:
A: deionized water
B: 1 wt.% sodium lauryl sulfate, 0,1 wt.% alcohol ethoxylate in deionized water.
C: 1 wt.% lignin derivative (table 1 below), 0,1 wt.% alcohol ethoxylate in deionized water.

**Table 1**

| **Composition** | **Lignin derivative** | **Type of lignin derivative** | **Counterion** | **Sulfonation degree (% organic S)** |
|---|---|---|---|---|
| C | LS-2 | Lignosulfonate | Na | 6 |

1 mL of compositions A, B, and C were applied to plastic surfaces and polished with a towel. The surfaces were allowed to dry for >30mins, then the treatment repeated once more. No visible film was observed on the white plastic after polishing, despite the lignin compositions being dark brown in color. 1mL of dirt (98% cooking oil + 2% carbon black) was applied to the surfaces and left to age at room temperature for 1 hour. The soiled surfaces were rinsed with tap water and the effect of the water rinse observed.

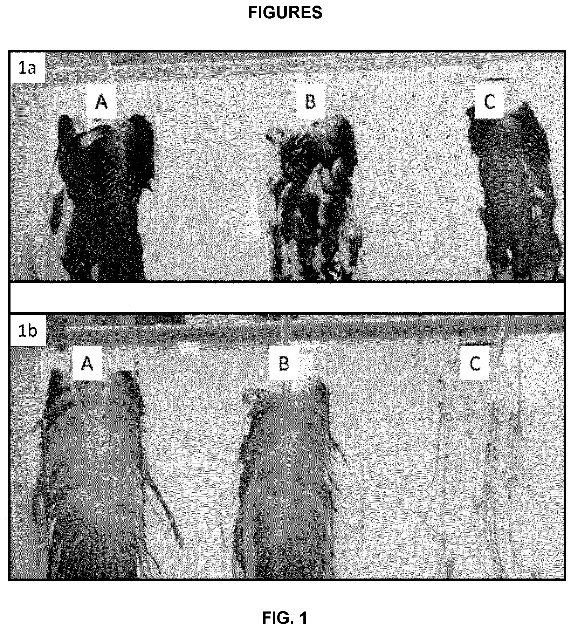

Figure 1a shows the surfaces after 1 second of rinsing and Figure 1b shows the surfaces after 20 seconds of rinsing.

The plastic area treated with the solution containing the lignosulfonate (composition C) facilitated the detachment of the oil from the surface, whereas the plastic areas treated with pure deioinized water or the composition containing the anionic surfactant remained soiled.

### Example 2: Soil release from steel surfaces at 1 wt.% lignin derivative concentration and in the presence of surfactant

1mL of solutions A, B, and C (see example 1) were applied to steel surfaces and polished with a towel. The surfaces were allowed to dry for >30mins, then the treatment repeated once more. 1mL of dirt (98% cooking oil + 2% carbon black) was applied to the surfaces. The steel plates were aged in the oven at 105 °C for 1 h and then rinsed with water and the effect of the water rinse observed.

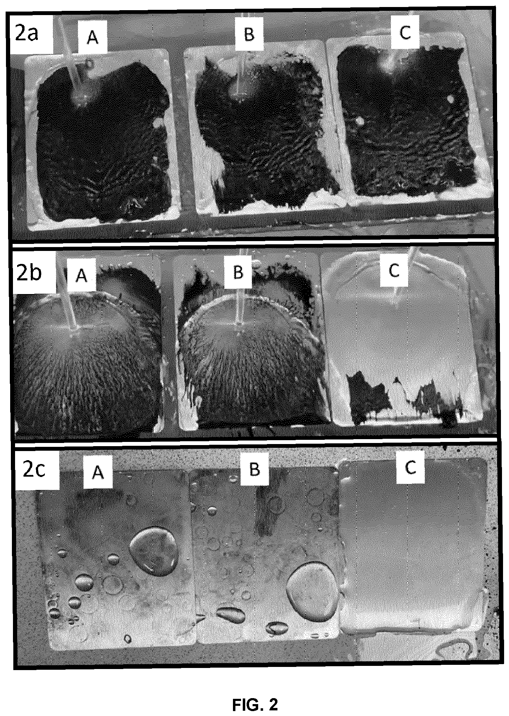

Figure 2a shows the surfaces after 1 second of rinsing and Figure 2b shows the surfaces after 20 seconds of rinsing.

The steel plates treated with the solution containing the lignosulfonate (solution C) facilitated the detachment of the oil from the surface, whereas the plates treated with pure deionized water or the solution containing the anionic surfactant remained soiled.

Figure 2c shows the plates laying flat on a surface after 2 minutes rinsing with water. The pooling water droplets and dry areas on the plates treated with the solutions without lignosulfonate (A and B) shows that the surface is still hydrophobic (i.e. oily), whereas the plate that was treated with the solution containing the lignosulfonate (composition C) is covered evenly with a layer of water indicating that the surface is hydrophilic (i.e. not oily). This shows that the oil was fully supported on the lignin film and did not contact the steel surface, which facilitated efficient soil release upon a water rinse.

### Example 3: Soil release from steel and plastic surfaces at 0.1 wt.% and 1 wt.% lignin derivative concentration without surfactants

Solutions of 0.1 wt.% or 1 wt.% lignin derivative in deionized water were prepared. 1 mL of the solutions were applied to plastic or steel surfaces, polished with a towel, left to dry for 30 minutes, and soiled with the carbon black + cooking oil as described above. The soiled surfaces were left to age at room temperature for 1 hour, and then rinsed with water.

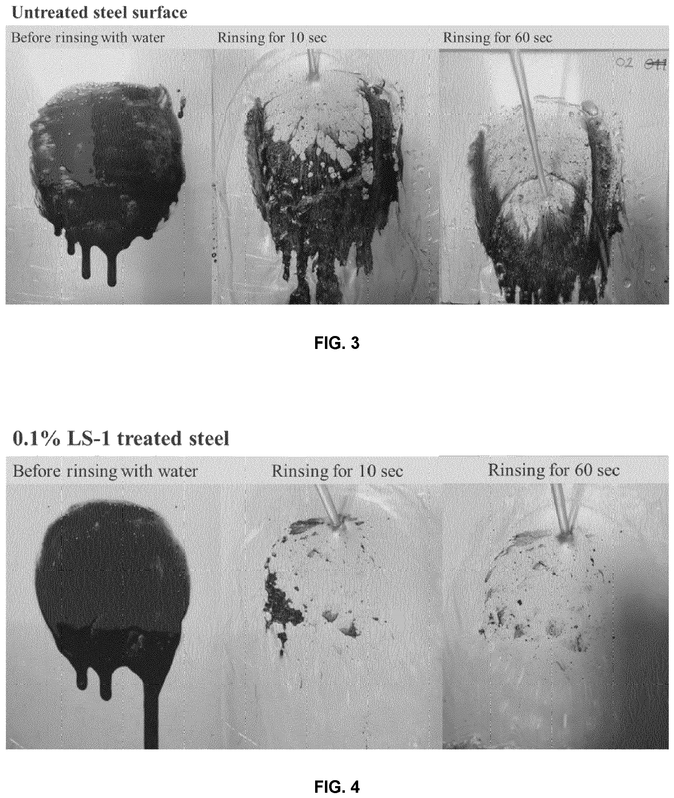

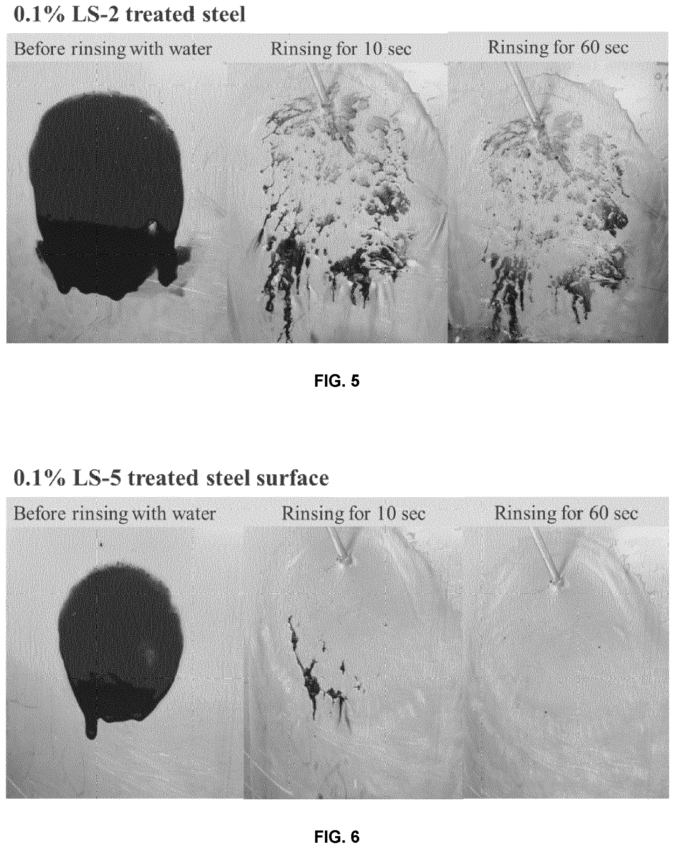

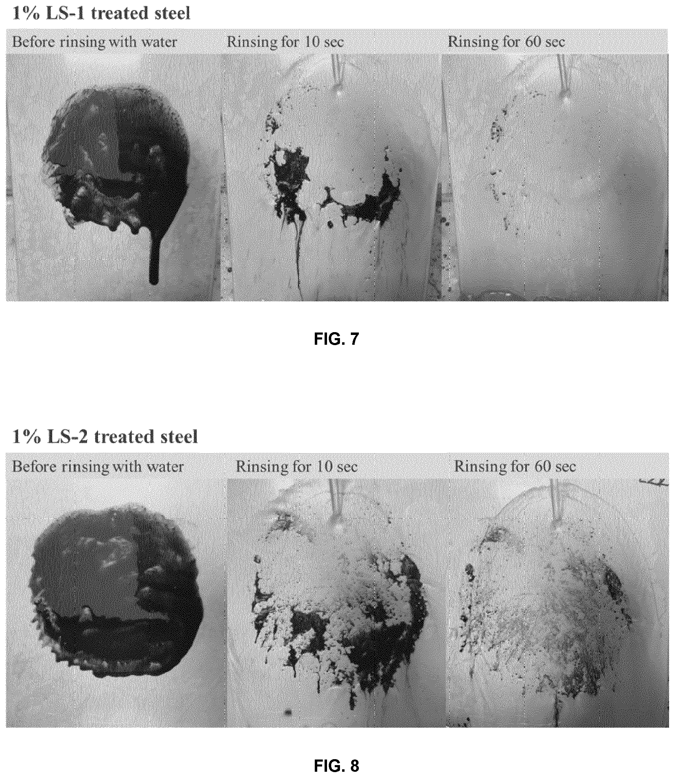

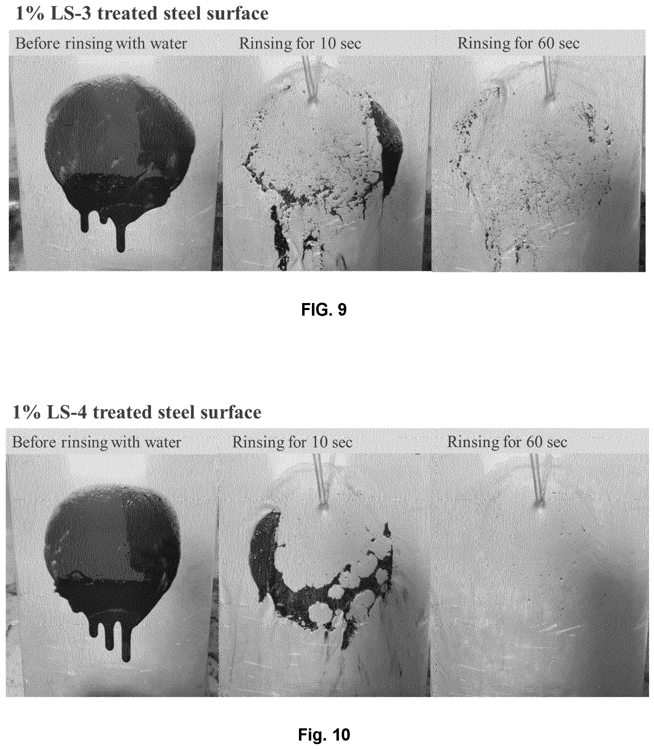

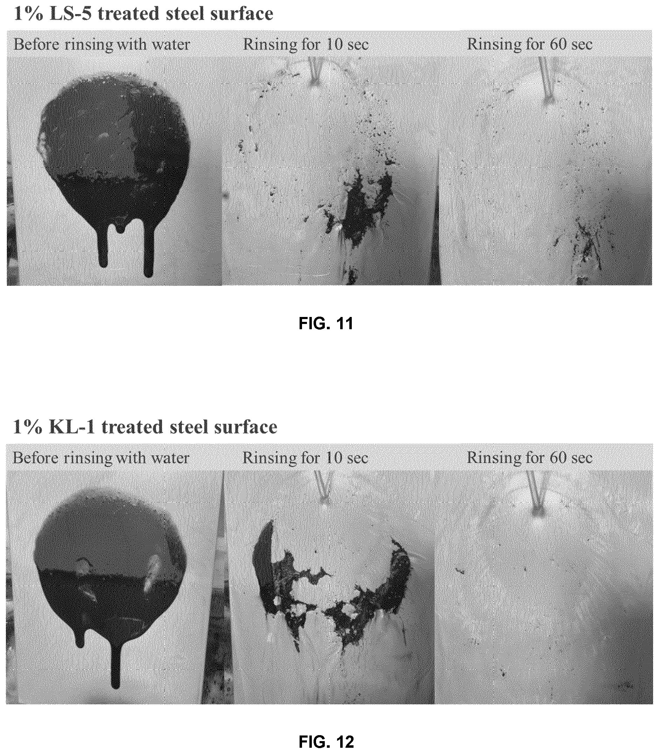

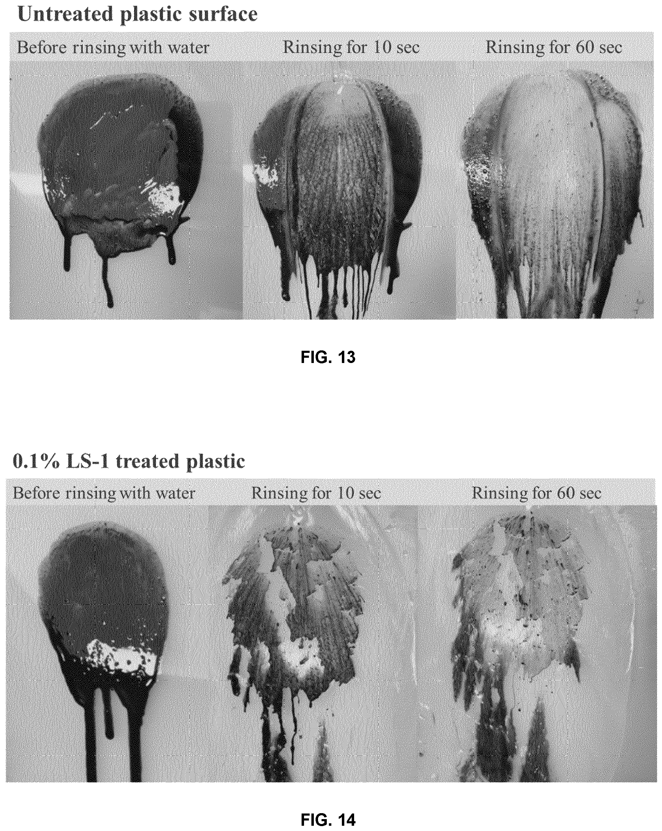

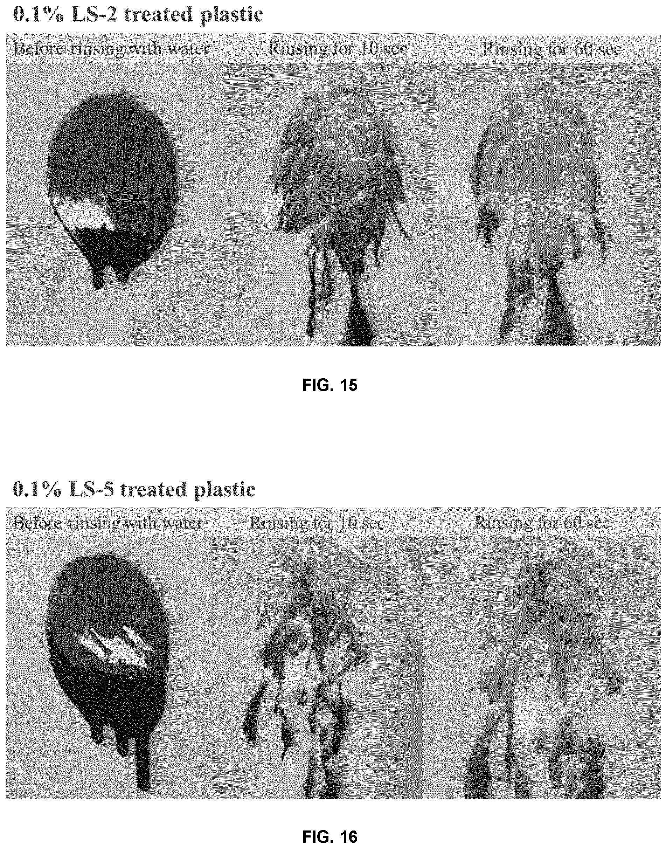

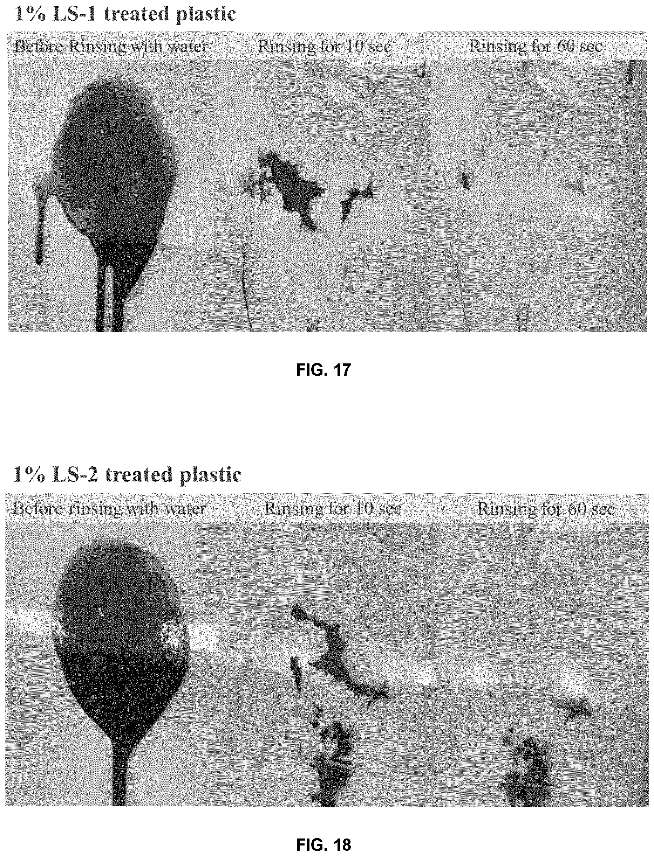

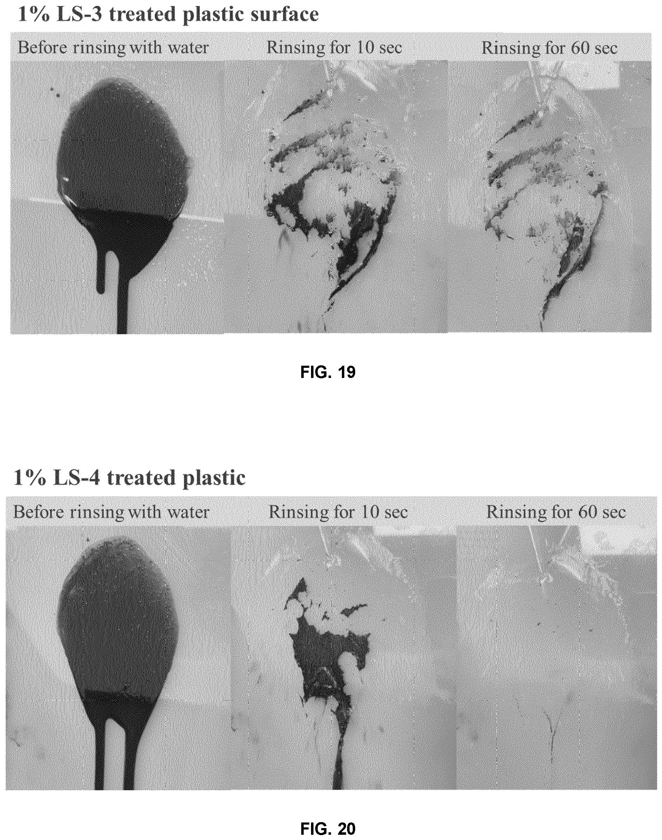

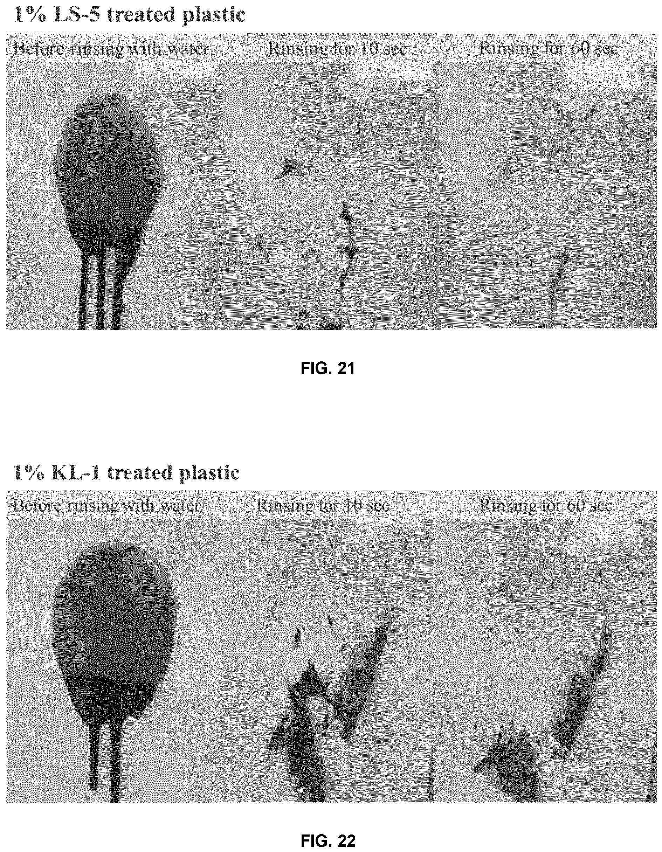

Figures 3 to 22 show the plastic and steel surfaces after 10 seconds and 60 seconds rinsing.

As can be taken from the Figures, for the steel surface, 0.1 wt.% lignin biopolymer concentration is enough to give a pronounced soil release affect, with only slight improvement when concentration is increased to 1 wt.% concentration.

For the plastic surfaces, 0.1 wt.% lignin biopolymer concentration results in only a mild soil release affect compared to the control, but the results improve significantly when the lignin biopolymer concentration is increased to 1 wt.%.

All of the lignin biopolymers demonstrated soil release properties, but the best results were obtained for lignosulfonate with low degree of sulfonation (LS-4), the oxidized Kraft lignin (KL-1) and the lignosulfonate with a multivalent counterion (LS-5). Lignin character and general performance are summarized in Table 2. Performance was judged qualitatively by the operator by assessing the remaining amount of dirt left on the surface that was treated with the lignin-containing composition compared to the surface that was treated with a composition without lignin. A low score (0-2) indicates that the surface treated using the lignin-containing composition was the same or only slightly cleaner than the surface treated using the composition without lignin. A high score (3-5) indicates that the surface treated using the lignin-containing composition was significantly cleaner than the surface treated using the composition without lignin.

**Table 2**

| **Lignin derivative** | **Type of lignin derivative** | **Counterion** | **Sulfonation derivative degree (% organic S** | **Performance score** |
|---|---|---|---|---|
| LS-1 | Lignosulfonate | Na | 5 | 4 |
| LS-2 | Lignosulfonate | Na | 6 | 3 |
| LS-3 | Lignosulfonate | Na | 9 | 2 |
| LS-4 | Lignosulfonate | Na | 2 | 5 |
| LS-5 | Lignosulfonate | Ca | 5 | 5 |
| KL-1 | Oxidized Kraft lignin | Na | 0 | 5 |

### Example 4: Film depletion over multiple water rinse cycles

Soil release, polymers should not be completely removed after a single water rinse to reduce the need for re-application. It is advantageous if the film is washed off over multiple rinses, removing layer-by-layer so that the protection can last longer.

A test was conducted to measure the depletion of the film over multiple water rinse cycles. A solution of 10 wt.% LS-1 in deioinized water was applied to the surface of a cuvette used for UV-analysis using a paper towel. The cuvettes were left to dry and UV analysis was used to measure absorbance of the lignin layer on the surface of the cuvette. Three UV spectra were then collected from the cuvette:
Without rinse
After 1x water rinse
After 2x water rinse

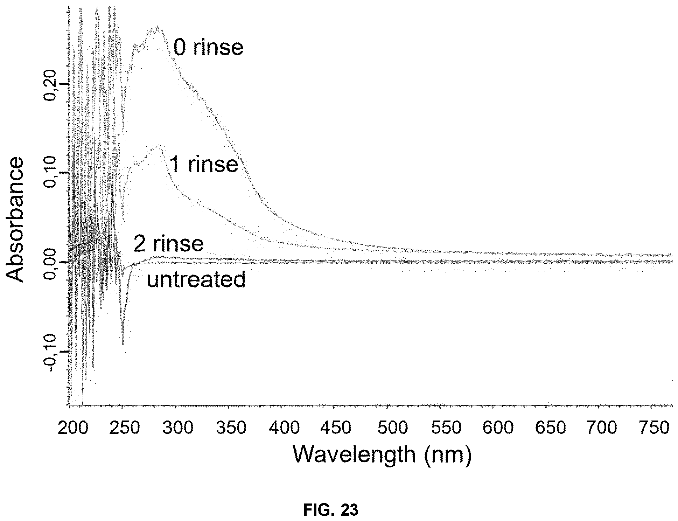

The results are shown in Figure 23. It can be seen that the absorbed layer is depleted after each rinse, but even after 2 rinses there is still a detectable lignin layer on the surface of the cuvette.

### Example 5: Contact angle measurements

The contact angle of a water droplet on an aluminium surface changes when treated with lignin biopolymers. Solutions of 1 wt.% lignin biopolymers were applied to the aluminium surface and left to dry for 30 minutes.

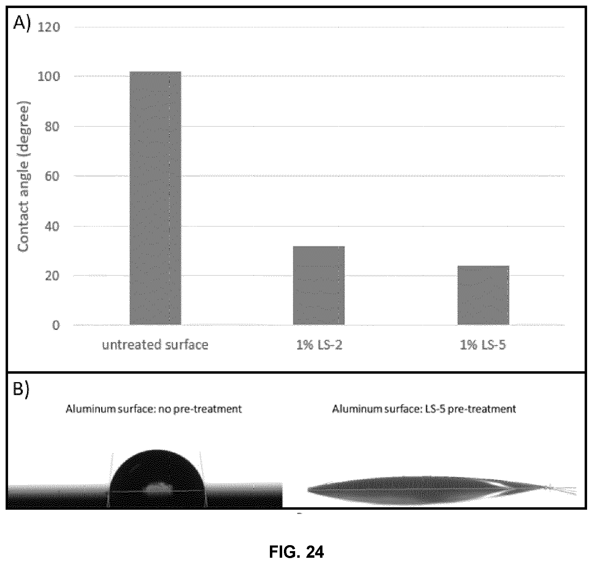

The results are shown in Figure 24. The contact angle of a water droplet on an untreated surface was 102°. The contact angle of a water droplet on a treated surface was 32° and 24° after treatment with LS-2 or LS-5, respectively.

## Claims

1. Use of a lignin derivative as a soil release agent, wherein the lignin derivative comprises charged functional groups.

2. The use according to Claim 1, wherein the lignin derivative is water-soluble.

3. The use according to Claim 1 or 2, wherein the charged functional groups are sulfonate and/or carboxylate groups.

4. The use according to any one of the preceding Claims, wherein the lignin derivative is sulfonated lignin, preferably lignosulfonate or sulfonated Kraft lignin, or
wherein the lignin derivative is oxidized lignin, preferably oxidized Kraft lignin.

5. The use according to any one of the preceding Claims, wherein the lignin derivative is lignosulfonate or oxidized Kraft lignin.

6. The use according to any one of the preceding Claims, wherein the charge of the functional groups is balanced by counter ions and the counter ions are singly positively charged ions, preferably alkali metal ions, more preferably sodium ions, or doubly positively charged ions, preferably alkaline earth metal ions, more preferably magnesium or calcium ions, even more preferably calcium ions.

7. The use according to Claim 6, wherein the counter ions are doubly positively charged ions, preferably alkaline earth metal ions, more preferably magnesium or calcium ions, even more preferably calcium ions.

8. The use according to any one of the preceding Claims, wherein the lignin derivative has an amount of organic sulfur which is associated with the sulfonate groups attached to the lignin of less than 8% w/w, preferably less than 7% w/w, more preferably less than 5% w/w, more preferably less than 4% w/w,
wherein the **amount of "organic" sulfur** (%S(org) is determined based on the difference between *total sulfur* %S(tot) and the inorganic sulfur %S(inorg) using the following relation: %S(org) = %S(tot) - %S(inorg); wherein the total sulfur is determined with a ThermoQuest NCS 2500 element analyzer, wherein 1-2 mg of sample are placed in tin capsules with a Vanadium pentoxide catalyst, wherein total sulfur in the sample is then quantified using the 2,5-Bis(5-tert-butyl-2-benzo-oxazol-2-yl)thiophene (BBOT) standard, further wherein samples are combusted at 1400°C and all sulfur is oxidized to SO₂ and quantified, wherein the *inorganic sulfur* is determined by measuring sulfate in an oxidized sample using ion chromatography with conductivity detection using a Dionex instrument using an IonPac AS11-HC column with 13 mM OH- eluent, wherein 30 mg sample are weighed into 50-ml volumetric flasks, wherein 10 ml of 0.5 % NaOH and 5 ml of 3 % H₂O₂ are added to oxidize sulfurous inorganic anions into sulfate, wherein the sample is then left 12-16 h to give time to react, wherein Milli-Q water is added and pH neutralized by adding 2 ml of 5 % CH3COOH and diluted to the mark with Milli-Q water, wherein sulfate standards are prepared between 5 mg/l and 80 mg/l, wherein the sulfate content in the oxidized samples is then determined using ion chromatography.

9. The use according to any one of the preceding Claims, wherein the lignin derivative is used on a solid surface, preferably on a metal or plastic surface.

10. A soil release composition, comprising:
• a lignin derivative as defined in any one of Claims 1-9, and
• water.

11. The soil release composition according to Claim 10, wherein the composition further comprises a surfactant, preferably alcohol ethoxylate;
optionally wherein the surfactant is present in an amount of 0.01 wt.% to 5 wt.%, preferably 0.01 wt.% to 3 wt.%, more preferably 0.01 wt.% to 1 wt.%, more preferably 0.05 wt.% to 0.15 wt.%, based on the total weight of the composition.

12. A method for imparting soil release characteristics to a surface, the method comprising the following steps:
(A) contacting the surface with a soil release composition defined in Claim 10 or 11, and
(B) drying the surface after application of the soil release composition, thereby creating a coating on the surface, wherein the coating comprises a lignin derivative as defined in one of claims 1-9.

13. The method according to Claim 12, wherein the surface is a solid surface.

14. The method according to Claim 12 or 13, wherein the surface is a metal surface, preferably a steel surface, and the soil release composition comprises the lignin derivative in an amount of 0.08 wt% to 0.12 wt%, based on the total weight of the composition.

15. The method according to any one of Claims 12-14, wherein the surface is a plastic surface and the soil release composition comprises the lignin derivative in an amount of 0.8 wt.% to 1.2 wt.%, based on the total weight of the composition.
